Europäisches Patentamt

European Patent Office

Office européen des brevets

(19)

(11) Veröffentlichungsnummer: **0 026 789**
A1

(12) EUROPÄISCHE PATENTANMELDUNG

(21) Anmeldenummer: 79103648.6

(22) Anmeldetag: 26.09.79

(51) Int. Cl.³: **B 01 D 23/20,** C 02 F 1/00

(30) Priorität: 03.09.79 CH 7949/79

(43) Veröffentlichungstag der Anmeldung: 15.04.81
Patentblatt 81/15

(84) Benannte Vertragsstaaten: **AT BE CH DE FR GB IT LU
NL SE**

(71) Anmelder: **GEBRÜDER SULZER
AKTIENGESELLSCHAFT, Zürcherstrasse 9,
CH-8401 Winterthur (CH)**

(72) Erfinder: **Brulhart, Paul, Tösstalstrasse 64,
CH-8400 Winterthur (CH)**

(74) Vertreter: **Sparing, Nikolaus, Dipl.-Ing.,
Lindemannstrasse 31, D-4000 Düsseldorf (DE)**

(54) Filteranlage, insbesondere für die Wasseraufbereitung.

(57) Bei einer Filteranlage, bei der für die Wegführung des
Filtrats auf dem Filterboden (1) mit Filterdüsen (4) bestückte Drainageleitungen (3) vorgesehen sind, sind die
Filterdüsen (4) beiderseits der vertikalen Mittelebene der
Drainageleitung (3) in zwei Reihen angeordnet, um auf
der Länge der Drainageleitung (3) eine größere Anzahl
Düsen (4) unterzubringen.

ACTORUM AG

COMPLETE DOCUMENT

P. 5453/Wg/IS

0026789

Gebrüder Sulzer, Aktiengesellschaft, Winterthur/Schweiz

Filteranlage, insbesondere für die Wasseraufbereitung

Die Erfindung betrifft eine Filteranlage, insbesondere für die Wasseraufbereitung, mit mindestens einem rückspülbaren Filterfeld aus körniger Filtermasse und mit einer Rückspülvorrichtung zum periodischen Reinigen der Filtermasse mit Hilfe von Druckluft und/oder Druckwasser, wobei mindestens annähernd auf dem Boden des Filterfeldes mindestens eine Drainageleitung zum Sammeln und Wegführen des Filtrats und zum Zuführen und Verteilen der Rückspülmedien verlegt ist, die in Längsrichtung mit Filterdüsen bestückt ist.

Gemäss einem bereits früher gemachten Vorschlag (DE-OS 28 52 316) ist es bei Filteranlagen der genannten Art vorteilhaft, die Drainageleitung auf dem Boden des Filterfeldes zu verlegen und die Filterdüsen - dem Boden zugewandt - auf der Unterseite, vorzugsweise längs der untersten Mantellinie, der meist rohrförmigen Drainageleitung anzuordnen.

Die Praxis hat nun gezeigt, dass bei der vorgeschlagenen Anordnung unter Umständen auf der Länge der Drainageleitung nicht genügend Filterdüsen unterzubringen sind. Aufgabe der Erfindung ist es, diesen Mangel zu beseitigen; dies wird nach der Erfindung dadurch erreicht, dass die Filterdüsen in mindestens zwei Reihen zu beiden Seiten der vertikalen Mittelebene der Drainageleitung angeordnet sind.

Durch die Erfindung kann die Anzahl Düsen in der Drainageleitung nahezu verdoppelt werden. Die Filterdüsen der beiden Reihen können dabei sowohl versetzt zueinander als auch zur vertikalen Mittelebene der Drainageleitung spiegelsymmetrisch angeordnet sein.

Ein Rückspülen gleichzeitig mit Luft und Wasser wird erheblich vereinfacht, wenn eine vertikale Trennwand in der Drainageleitung die beiden Düsenreihen voneinander trennt.

Ein für die Rückspülung in der Filtermasse unter den Filterdüsen unter Umständen entstehender Totbereich, in dem es zu - durch das Rückspülen nicht erfassten - Schmutzansammlungen kommen kann, lässt sich auf einfache Weise verringern, wenn die Achsen der Düsen gegen die Horizontale nach unten geneigt sind.

Wird die Drainageleitung mit einem kantigen Querschnittsprofil ausgeführt, so können bei der seitlichen Anordnung der Düsen unter Umständen an der Oberseite der Drainageleitung ähnliche Toträume für die Rückspülung entstehen; um diese Toträume zu vermeiden, kann man den Querschnitt der Drainageleitung entweder dreieckig ausführen oder - bei einem vierkantigen Querschnittsprofil und mehreren, parallel zueinander verlaufenden Drainageleitungen - die Leitung auf einer seiner Kanten lagern und die Filterdüsen in den beiden von dieser Kante V-förmig nach oben verlaufenden Profilflächen anordnen.

Im folgenden wird die Erfindung anhand von Ausführungsbeispielen im Zusammenhang mit der Zeichnung näher erläutert.

       Fig. 1 zeigt in einem Ausschnitt aus einem Filterbett einen Querschnitt durch die Filtermasse senkrecht zur Achse einer Drainageleitung;

       Fig. 2 - 5 geben in gleicher Darstellung verschiedene Ausführungsbeispiele für die erfindungsgemässe Anordnung der Filterdüsen in Drainageleitungen unterschiedlichen Querschnitts wieder.

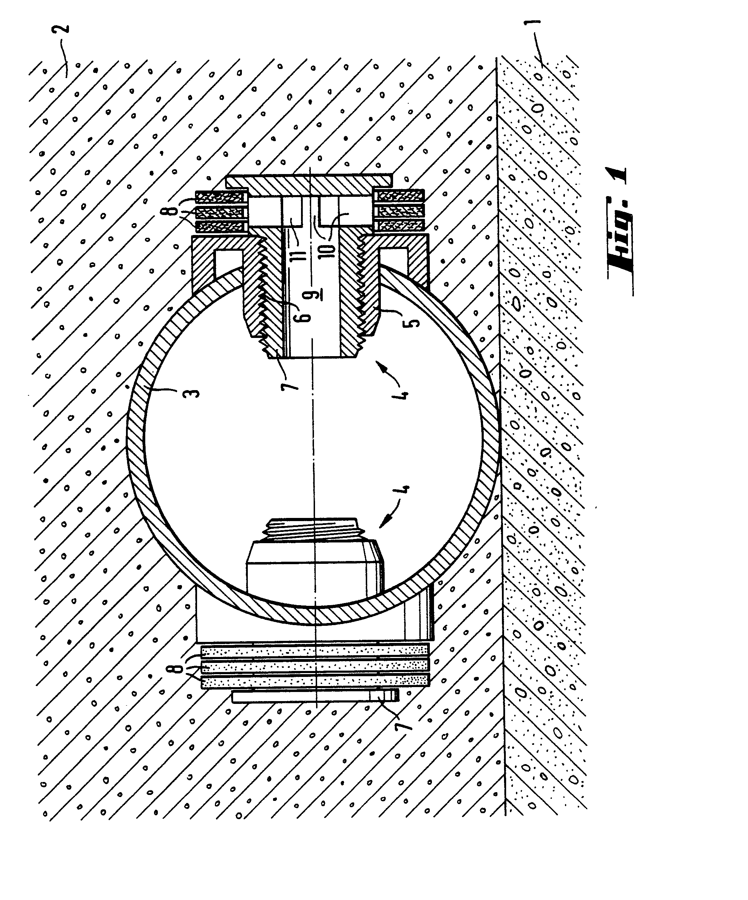

Eine im Beispiel nach Fig. 1 rohrförmige Drainageleitung 3 ist auf dem Boden 1 eines nicht weiter dargestellten Filterbettes abgestellt und beispielsweise durch nicht gezeigte, im Boden 1 verankerte Briden oder Rohrschellen fixiert. Die Leitung 3 ist eingebettet in eine Filtermasse 2; mit dem Innern der Drainageleitung besteht für das Filtrat bzw. die Rückspülmedien eine Strömungsverbindung über die als Ganzes mit 4 bezeichneten Filterdüsen, die durch Oeffnungen in der Rohr- oder Leitungswand gesteckt sind.

Diese Filterdüsen sind erfindungsgemäss in der Leitung 3 in zwei Reihen aufgereiht, wobei die in Fig. 1 in der horizontalen Mittelebene des Leitungsrohres 3 liegenden Düsenachsen parallel zum Filterboden 1 waagrecht verlaufen.

Die in ihrem konstruktiven Aufbau konventionellen Filterdüsen 4 haben zunächst als Verbindung zu der Leitung 3 einen Zwischen- oder Auflagering 5, der durch die Oeffnungen der Leitung 3 gesteckt und in dieser fixiert, z.B. mit dieser verklebt, ist. Der Auflagering 5 weist eine zentrale Gewindebohrung auf, in die ein Düsenkopf 7 eingeschraubt ist. Mit Hilfe des Düsenkopfes 7 werden Fiterscheiben 8 auf die Aussenseite des Auflageringes 5 gepresst.

Im Düsenkopf 7 ist in Richtung seiner Achse eine zentrale Bohrung 9 vorhanden, die zusammen mit den mit Rippen 10 versehenen Querbohrungen 11 zwischen dem Innenraum der Drainageleitung 3 und der Filtermasse den Strömungsweg für das Filtrat und die Rückspülmedien bildet.

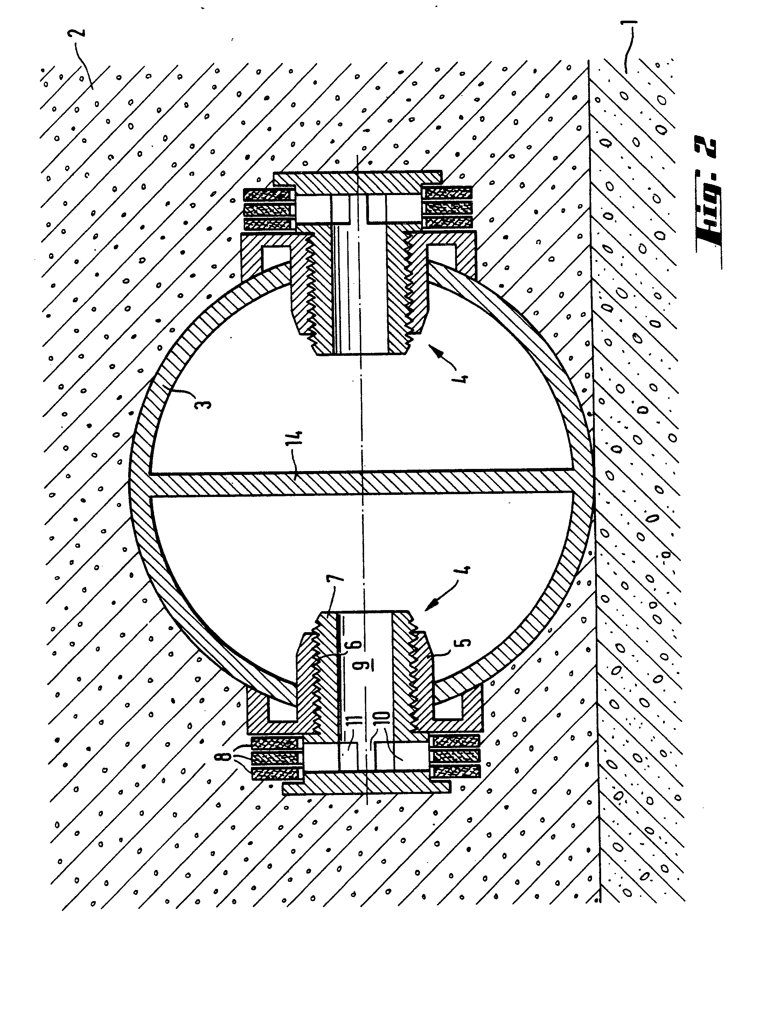

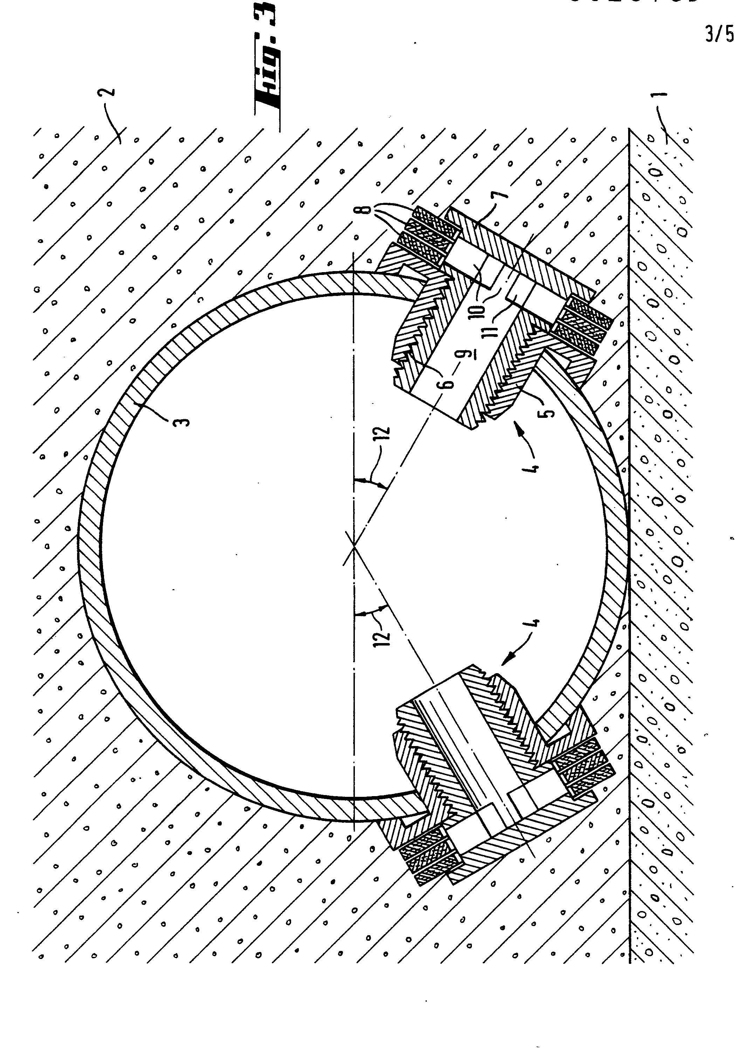

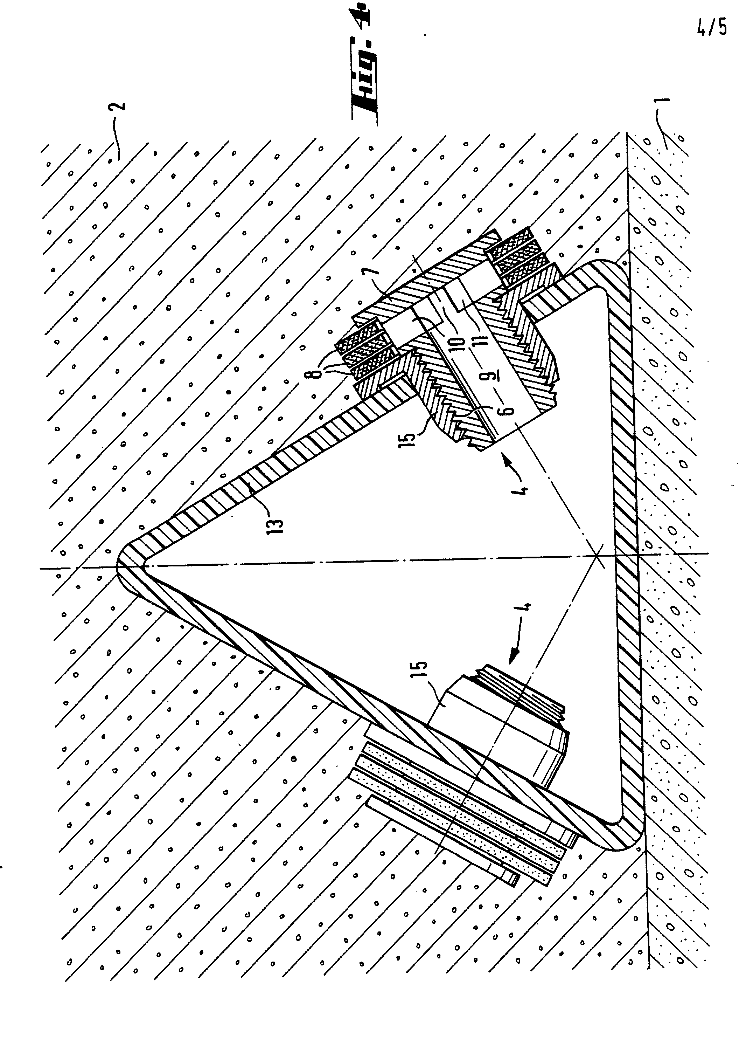

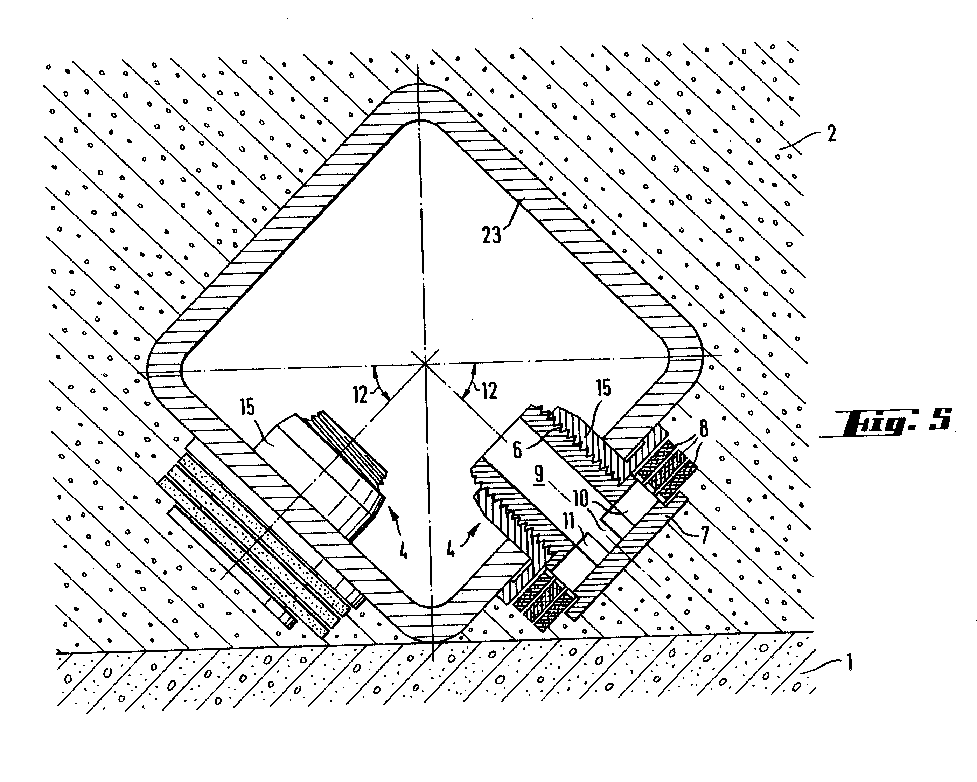

In Fig. 1 - ebenso wie in den Fig. 4 und 5 - sind die beiden Reihen der Filterdüsen 4 versetzt zueinander angeordnet, während sie in Fig. 2 und 3 spiegelsymmetrisch zur vertikalen Mittelebene der Leitung 3 liegen.

Fig. 2 weist als Besonderheit gegenüber Fig. 1 eine vertikale Trennwand 14 auf, durch die der Innenraum der Drainageleitung 3 in zwei Teilräume unterteilt wird. Beim Rückspülen kann, wenn einer der Teilräume mit Wasser und der andere mit Luft beschickt werden, die Durchführung einer gleichzeitigen Rückspülung mit Luft und Wasser erheblich vereinfacht werden.

Bei der dritten Ausführungsform der Erfindung sind die Filterdüsen 4 in die untere Hälfte der Drainageleitung 3 verlegt, wobei ihre Achsen mit der Horizontalen einen Winkel 12 bilden. Mit dieser Konstruktion können, wie bereits erwähnt, beim Rückspülen nicht erfassbare Toträume, die unterhalb der Düsen 4 in der Filtermasse 2 auftreten können, verringert oder vermieden werden.

Im Beispiel nach Fig. 4 ist die, beispielsweise aus Kunststoff oder Eternit, gefertigte Drainageleitung 13 in ihrem Querschnitt ein gleichseitiges Dreieck. Diese Konstruktion hat - neben dem bereits erwähnten Vorteil, dass beim Rückspülen Totzonen oberhalb der Leitung 13 vermieden werden - die weiteren Vorteile einer breiten und sicheren Auflagefläche auf dem Filterboden 1 und einer einfacheren Form für den Zwischen- oder Auflagering 15, der nicht mehr an eine Rohrform angepasst sein muss.

Beim letzten Ausführungsbeispiel nach Fig. 5 schliesslich hat die Drainageleitung 23 quadratischen Querschnitt und ist mit einer Kante dieses Querschnitts auf dem Filterboden 1 abgestellt. Die Filterdüsen 4 sind hierbei in die V-förmig nach oben verlaufenden Profilflächen der Leitung 23 eingesetzt. Bei dieser Konstruktion sind Toträume sowohl unter den Filterdüsen 4 als auch - sofern mehrere Drainageleitungen 23 vorhanden sind - oberhalb der Drainageleitungen 23 vermieden. Darüberhinaus können auch hier die einfacheren Zwischen- oder Auflageringe 15 eingesetzt werden.

0026789

Patentansprüche

1. Filteranlage, insbesondere für die Wasseraufbereitung, mit mindestens einem rückspülbaren Filterfeld aus körniger Filtermasse und mit einer Rückspülvorrichtung zum periodischen Reinigen der Filtermasse mit Hilfe von Druckluft und/oder Druckwasser, wobei mindestens annähernd auf dem Boden des Filterfeldes mindestens eine Drainageleitung zum Sammeln und Wegführen des Filtrats und zum Zuführen und Verteilen der Rückspülmedien verlegt ist, die in Längsrichtung mit Filterdüsen bestückt ist, dadurch gekennzeichnet, dass die Filterdüsen (4) in mindestens zwei Reihen zu beiden Seiten der vertikalen Mittelebene der Drainageleitung (3, 13, 23) angeordnet sind.

2. Anlage nach Anspruch 1, dadurch gekennzeichnet, dass die Filterdüsen (4) einander zur vertikalen Mittelebene spiegelsymmetrisch gegenüber liegen.

3. Anlage nach Anspruch 1, dadurch gekennzeichnet, dass die Filterdüsen (4) der beiden Reihen versetzt zueinander angeordnet sind.

4. Anlage nach Anspruch 1, dadurch gekennzeichnet, dass eine vertikale Trennwand (14) in der Drainageleitung (3) die beiden Düsenreihen voneinander trenne.

5.. Anlage nach Anspruch 1, dadurch gekennzeichnet, dass die Achsen der Düsen (4) gegen die Horizontale nach unten geneigt sind.

6. Anlage nach Anspruch 1, dadurch gekennzeichnet, dass die Drainageleitung (13, 23) ein kantiges Querschnittsprofil aufweist.

7. Anlage nach Anspruch 6, dadurch gekennzeichnet, dass das Querschnittsprofil ein Vierkant (23) ist, der auf einer

0026789

seiner Kanten gelagert ist, und dass die Filterdüsen (4)
in den beiden von dieser Kante V-förmig nach oben verlaufenden Profilflächen angeordnet sind.

Fig. 1

Fig. 2

0026789 2/5

Fig. 3

Fig. 4

**Fig. 5**

**Europäisches Patentamt**

## EUROPÄISCHER RECHERCHENBERICHT

EP 79 10 3648.6

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE - B - 1 219 904 (PERMUTIT) <br> * Fig. 2 * <br> & GB - A - 895 377 <br> -- | 1,2 | B 01 D 23/20 |
| X | US - A - 3 595 394 (PERMUTIT) <br> * Fig. * <br> -- | 1,2 | |
| | DD - A - 5 651 (W. KÖHLER) <br> * Fig. 7 * <br> -- | 1 | |
| | CH - A - 202 235 (OZONGESELLSCHAFT) <br> * Fig. 1 bis 7 * <br> -- | 1,2, 5,6 | **RECHERCHIERTE SACHGEBIETE (Int. Cl.3)** <br><br> B 01 D 23/10 |
| | FR - A - 352 288 (B.-J. BEZAULT) <br> * Fig. 9, 10 * <br> -- | 3 | B 01 D 23/18 <br> B 01 D 23/20 |
| | FR - A - 1 275 586 (A. RENSONNET) <br> * Fig. 6, 7 * <br> -- | 6 | |
| | FR - A - 1 382 861 (R.P. MOORE) <br> * Fig. 4 * <br> -- | 1,2 | **KATEGORIE DER GENANNTEN DOKUMENTE** |
| | FR - A - 1 423 772 (SOLOG) <br> * Fig. 1 * <br> -- | 1,2,6 | X: von besonderer Bedeutung <br> A: technologischer Hintergrund <br> O: nichtschriftliche Offenbarung <br> P: Zwischenliteratur |
| | US - A - 1 554 129 (L. RYAN) <br> * Position 14 * <br> -- <br><br> ./.. | 5 | T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | &: Mitglied der gleichen Patent-familie, übereinstimmendes Dokument |

| Recherchenort | Abschlußdatum der Recherche | Prüfer |
|---|---|---|
| Berlin | 05-01-1981 | KÜHN |

EPA form 1503.1 06.78

Europäisches Patentamt

**EUROPÄISCHER RECHERCHENBERICHT**

0026789

Nummer der Anmeldung

EP 79 10 3648.6
- Seite 2 -

| Kategorie | Kennzeichnung des Dokuments mit Angabe, soweit erforderlich, der maßgeblichen Teile | betrifft Anspruch |
|---|---|---|
| | US - A - 1 572 076 (W. PATERSON)<br>* Position e *<br>-- | 1,2 |
| | US - A - 1 607 877 (E.F. DELERY)<br>* Fig. 3, 4 *<br>-- | 1-3 |
| | US - A - 3 956 134 (J.R. STURGILL)<br>* Fig. 2, 7, 10 *<br>-- | 1,3, 5,6 |
| A | DE - C - 696 400 (O. JOCH)<br>* Position i *<br>-- | |
| A | DE - C - 736 915 (BAMAG-MEGUIN)<br>* Fig. 1, 2 *<br>-- | |
| A | DE - C - 747 267 (BAMAG-MEGUIN)<br>* Fig. *<br>-- | |
| A | DE - B - 1 271 078 (KRUPP)<br>* Fig. 1 *<br>---- | |

**EINSCHLÄGIGE DOKUMENTE**

KLASSIFIKATION DER ANMELDUNG (Int.Cl.5)

RECHERCHIERTE SACHGEBIETE (Int. Cl.3)

EPA Form 1503.2   06.78